# EUROPEAN PATENT SPECIFICATION

(11) **EP 2 018 100 B1**
(45) Date of publication and mention of the grant of the patent: **08.08.2012**
(21) Application number: 07747312.2
(22) Date of filing: 15.05.2007
(51) Int. Cl.: A01M 9/00, A01M 1/00, A01G 13/00

(54) **USE OF A DEVICE FOR DISTRIBUTING BENEFICIAL ARTHROPODS**
VERWENDUNG EINES GERÄTS ZUM AUSBRINGEN VON NUTZARTHROPODEN
UTILISATION D'UN DISPOSITIF POUR DISTRIBUER DES ARTHROPODES UTILES

(30) Priority: 19.05.2006 NL 1031842; 03.07.2006 NL 1032099
(43) Date of publication of application: 28.01.2009
(73) Proprietor: Koppert B.V., 2651 BE Berkel en Rodenrijs (NL)
(72) Inventor: TETTEROO, Adrianus, Nicolaas, Maria, NL-2548 RC Den Haag (NL); VEENMAN, Arend, NL-2651 SP Berkel en Rodenrijs (NL); HOOGERBRUGGE, Hans, NL-2661 TV Bergschenhoek (NL); OOSTHOEK, Henri, Peter, Paul, NL-2651 AM Berkel en Rodenrijs (NL)
(74) Representative: Van den Heuvel, Henricus Theodorus
(86) International application number: PCT/NL2007/000130
(87) International publication number: WO 2007/136246

(56) References cited:
- WO-A-97/07898
- US-A- 5 718 377
- US-A- 5 794 847

## Description

The invention relates to the use of a device for distributing beneficial arthropods.

Beneficial arthropods are presently frequently used in agriculture, for example for biological pest control. Examples of beneficial arthropods, used for this purpose, are (predatory) mites, parasite wasps and assassin-bugs.

In order to perform their function, such beneficial arthropods must be distributed (dispersed) in a crop. In the state of the art this is done by manually dispersing the beneficial arthropods (possibly on a carrier) in the crop. Alternatively predatory mites may be dispersed by using sachets, wherein an amount of such predatory mites is present. Such sachets also must be hung manually in the crop. These methods are very labour-intensive.

In order to provide a saving of labour while distributing beneficial arthropods, in DE 4424499 a device is described, with which such beneficial arthropods may be dispersed by means of blowing. In this device beneficial arthropods are introduced into a pressure duct, from a reservoir, through which an airstream is forcefully directed with high velocity. However, it has been found that damage may be caused to the arthropods that are distributed with such devices from the state of the art, using blowing from a pressure duct. Due to this the arthropods perform less well in the tasks for which they are distributed. Such damage may especially occur when the forced gas flow is generated with a relatively large power, for instance to blow the arthropods over a distance of several meters.

In addition to this, this device from the state of the art still requires a considerable amount of human labour. This because it is carried on the back of a person, comparable to a leaf blower, such as used for making streets, beds and plots leaf free.

US 5 794 847 discloses an apparatus for distributing the beneficial insect Trichogramma. The beneficial insect is distributed as pupae within eggs of a host grain moth. In the apparatus the beneficial insects are introduced from a hopper via a J tube to a chamber. The chamber is connected with a gas displacer. Introduction of the beneficial insects from the J tube into the chamber is such that on introduction into the gas flow the beneficial insects directly meet the gas flow at the highest velocity.

The present invention intends to provide the use of a device for distributing beneficial arthropods, wherein less damage is caused to the arthropods, such that they perform better when carrying out the tasks for which they are spread. Such object is achieved by the use of a device according to claim 1. In several embodiments of the invention further measures are taken to make the distribution of the beneficial arthropods less labour intensive than the methods known in the state of the art.

In the method according to the invention an amount of useful arthropods is provided in a container. As the skilled person will understand, the form and material of the container are of no importance as long as the container is suitable for holding the beneficial arthropods. The container for example is a cylindrical body, of which at least one of the circular openings is closed.

The beneficial arthropods are provided as such or in combination with a carrier. As the use of a carrier material is common for many beneficial arthropods, it should be understood that when solely the term "beneficial arthropods" or "arthropods" is used, these terms also encompass the combination with a carrier material. Beneficial arthropods encompass all life stadia, inclusive eggs, nymphs (as far as these occur in a certain species), pupae (as far as these occur in a certain species), and adults of for example insects, such as parasite wasps and assassin-bugs and mites, such as predatory mites, for example phytoseiidae, such as described by De Moraes et al. (De Moraes, G.J., J.A. McMurtry, H.A. Denmark & C.B. Campos (2004). A revised catalog of the mite family Phytoseiidae. Magnolia Press Auckland New Zealand). But within this term also other arthropods, which may be used in biological pest destruction, are included. When an arthropod has a suitable size and/or form and/or mass to be distributed by means of blowing, in principle it can be distributed by using the method according to the invention. The skilled person will be able to determine whether the arthropod is suitable for distribution (dispersion) by means of blowing. Examples of carriers, that may be used in blowing, are bran, sawdust, vermiculite and the like.

The container comprises a number of exits for the arthropods. Within the ambit of this invention, a number of comprises, each time the term is used, one or more, The exits are suitable to allow the arthropods and possibly the carrier to pass. For example, the dosaging of the arthropods is controlled and/or influenced. The exits are for example openings (such as holes) provided in the container. These openings may be closable by means of a closing means, such as a valve. The openings for example may be provided evenly in the mantle of a cylindrical body, of which at least one of the circular openings is closed. The openings may for example be provided on a circle on predetermined distances expressed in degrees, such as every 10-360', for example 45-180', inclusive 90'. When the axis of the cylinder is placed under an angle with the lines of gravity, the arthropods may be dosed by rotating the cylinder. The dosaging will amongst others depend on the speed of rotations, the size of the openings and the size of the arthropods, and the size of the optional carrier. For example, by using these parameters the dosaging of the arthropods may be controlled and/or influenced. Alternatively the dosaging of the arthropods may be controlled and/or influenced by making the opening in the container closable by means of a controllable valve and controlling the valve in agreement with the necessary dosaging. The necessary dosaging required to distribute sufficient arthropods in the crop, will amongst others depend on the crop, the nature of the arthropods and the function of the arthropods in the crop. It is within the ambit of the knowledge of the skilled person to determine the necessary dosaging.

From the exit the arthropods are directed in a forced gas flow. With forced gas flow should be understood a gas flow which is forcefully blown and/or directed in a particular direction the gas is preferably a gas mixture, such as air. The arthropods may be guided mechanically or under the influence of gravity in the forced gas flow. Suitable mechanical means will be known to the skilled person. For example, a screw transporter may be mentioned. Use of gravity is preferable. When using gravity the exits of the arthropods will be placed above or in the forced gas flow.

The forced gas flow may be generated continuously or pulsating with a gas displacer. The directions wherein the forced gas flow is generated, the blow direction, may be directed horizontally, but also under an angle with the horizontal. Within the ambit of this invention a gas displacer should be understood to be a device suitable for displacing gas, for example by creating pressure differences. As a gas displacer use may be made of known means, such as for example rotors (inclusive propeller), of various designs, such as two-, three- or multiple bladed rotors (inclusive propellers), turbines, or gas containers with a pressurised gas. When using one or more rotors these may be placed in a cylindrical rotor chamber, having an inlet and an outlet. The benefit of this is that the forced gas flow is channelled in the direction of the outlet. Relative to the gas flow generated by a rotor in free space, this gas flow is more directed in the direction of the axis of the rotor.

The method according to the invention is characterized in that the forced gas flow at least partially comprises an axial velocity gradient, and that the arthropods are introduced into the forced gas flow in the proximity of a part of the forced gas flow, having an axial velocity gradient. Introducing the arthropods in the proximity of a part of the forced gas flow having an axial velocity gradient comprises introduction of the arthropods in a part of the forced gas flow with an axial velocity.

In the device according to the invention the forced gas flow at least partially comprises an axial speed gradient. The forced gas flow as such may comprise multiple components in the blow direction, of which a number have an axial velocity gradient. A number of comprises, within the ambit of this invention, one or more.

With a gas flow having an axial velocity gradient is meant, a gas flow wherein the axial velocity, meaning the gas velocity in the blow direction, has a gradient in the direction perpendicular to the blow direction. As such, the axial velocity increases, respectively decreases, in the direction perpendicular to the blow direction, depending on whether the axial velocity gradient is considered in the direction of the gradient or against the gradient.

In the method according to the invention arthropods are inserted in the gas flow, such that in the radial direction, meaning perpendicular to the blow direction, they travel through a part of the forced gas flow, having the axial velocity gradient, in the direction of the increasing velocity. This is possible by increasing the axial velocity from above to below and by having the arthropods perform an axial movement from above to below, for instance under influence of gravity. As such, the arthropods make a combined movement comprising a movement in the blow direction and a vertical movement under the influence of gravity.

Because the arthropods are introduced in a part of the forced gas flow having an axial velocity gradient, they are only shortly or not exposed to the maximal velocity of the forced gas flow. Hereby damage, such as that which occurs in the devices of the state of art, is at least reduced.

The gas flow having an axial velocity gradient may be generated by a rotor, such as a propellor, rotating in the free space. Alternatively the gas flow having an axial velocity gradient may be generate by expanding the forced gas flow. While expanding a gas flow the velocity of the gas flow will reduce. The decrease in the velocity will be greater in the outer parts than in the core of the gas flow. Hereby a gas flow having an axial velocity gradient will be created.

The forced gas flow may for example be expanded by directing it from a pressure conduit or a pressure duct in free space. Alternatively the forced gas flow may be expanded by directing it from a first pressure conduit (or pressure duct) in a second pressure conduit (or pressure duct), having a larger diameter than the first conduit.

The arthropods may be introduced by introducing them in the blow direction before or after expanding of the forced gas flow. Introduction in the forced gas flow after expansion in the free space is especially preferable, because the chance of damage to the arthropods is smallest, because introduction of the arthropods is outside a pressure duct. Also hereby it is possible to take additional measures for improvement of an equal distribution of the arthropods, as will be discussed later.

When the arthropods are introduced in the forced gas flow in a pressure duct, further special measures should be taken to avoid the problems of the state of the art.

This may for example be achieved by introducing the arthropods in the proximity of the exhaust in the free space of the pressure duct. Hereby the distance and time of their path through the pressure duct is limited. Introduction in the proximity of the exhaust of the pressure duct takes place by introducing the arthropods, such that the relation 1/d ≤ 2 is complied with. In this 1 is the distance in the blow direction of the introduction position of the arthropods to the exhaust of the pressure duct, and d is the diameter of the exhaust of the pressure duct. Preferably 1/d ≤ 1, more preferably ≤ 1/2, even more preferably ≤ 1/3, even more preferably ≤ 1/4, most preferably ≤ 1/5.

Alternatively, according to a further preferred embodiment, the forced gas flow may at least partially be directed from a first duct having a first diameter in a second duct having a second diameter, which second diameter is larger than the first diameter, and in addition to this a third duct is provided having an exhaust also running into the second duct. In this embodiment a first component of the forced gas flow having a first gas velocity is directed through the first channel and through the third channel a second component of a forced gas flow having a second gas velocity lower than the first gas velocity is directed. The arthropods may hereby be introduced in the forced gas flow by introducing them in the second duct in the blow direction before or after expansion of the first component of the forced gas flow.

Due to the difference in gas velocity of the first component of the forced gas flow and the second component of the forced gas flow in the second duct after the exhaust of the first duct a (combined) forced gas flow having an axial velocity gradient will be created.

The first and second component of the forced gas flow may be formed as separate gas flows by separate gas displacers, adjusted to generate gas flows having differing gas velocities.

Alternatively the first component may be formed with a gas displacer and the second component is formed by connecting the third channel with the outer air. Due to the gas displacement in the second channel, caused by the forced gas flow, which flows via the first channel in the second channel, air from outside will be sucked into the first channel. This sucked in outside air will in general have a lower gas flow and as such may function as the second component.

In a further alternative method the first and second component of the forced gas flow are formed by separating the forced gas flow in a first component having a relatively high gas velocity and a second component having a relatively low gas velocity. This may be achieved by designing the first and second channel, such that the first channel has a smaller diameter than the second channel. Hereby the first channel may be placed in the second channel. The space between the first channel and the second channel hereby serves as the third channel. By providing in the third channel a material that limitedly allows a gas flow to pass, the forced gas flow, directed from the second compartment, is decelerated, while it may essentially flow freely from the first compartment. In the second compartment, where the first and second component flow together again, a forced gas flow having an axial velocity gradient is formed. Any means that may resist free flow of the forced gas flow may be used to decelerate the gas flow in the third channel. A suitable means for instance is a perforated plate.

In the free expanding part of the forced gas flow the arthropods are carried along. Under influence of amongst others the forces of the forced gas flow, the gravity and the friction forces they will obtain a certain flight path.

In the method according to the invention the forced gas flow is generated or directed above the crop, wherein the useful arthropods are to be distributed. This may be achieved by placing the gas displacer above the crop and/or by placing an exhaust of a duct system directing the forced gas flow from the gas displacer above the crop.

While simultaneously introducing the beneficial arthropods in the forced gas flow, the gas displacer may be moved above the crop, preferably in a straight movement. Moving the gas displacer preferably takes place in a essentially horizontal plane. In addition to this, moving the gas displacer preferably is such that the direction of movement has a directional component perpendicular to the direction of the gas displacement. Most preferably the forced gas flow is moved in an essentially horizontal plane, essentially perpendicular to the direction of the forced gas flow.

A direction having a directional component perpendicular to the direction of the forced gas flow is, such as the skilled person will understand, a direction deviating from the direction of the forced gas flow or deviating from the opposite direction. Or in other words, the direction having a directional component perpendicular to the direction of the forced gas flow makes an angle with the direction of the forced gas flow larger than 0° and smaller than 180°.

Moving the gas displacer may be achieved by moving the gas displacer itself and/or an exhaust of a duct system directing the forced air flow from the gas displacer. This may be achieved automatically, for instance by using an automated transport system. Examples of such transport systems are rolling and hanging transport systems, for instance a monorail system used for spraying robots known in the greenhouse agriculture. In a preferred embodiment of the method according to the invention the gas displacer is moved by means of a spraying robot.

In a preferred embodiment the forced gas flow is generated such that the arthropods are blown over a number of metres of maximal 0,5-8 metres, preferably about 3-6 metres, more preferably about 4-6 metres, even more preferably about 4 metres. This maximal blowing distance is well suited for use within greenhouse agriculture. When using a forced gas flow that is strong enough to achieve this, the chance is big that in the first metres, after the point of introduction of the arthropods in the forced gas flow no arthropods will be distributed. This may cause an uneven distribution of the arthropods.

According to a further preferred embodiment of the method therefore a fraction of the arthropods is blown by a gas flow, the counter gas flow, in a direction having a directional component perpendicular to the direction of the forced gas flow. Preferably the fraction of arthropods is blown by the counter gas flow in a direction, also having a directional component opposite to the direction of the forced gas flow. Hereby it is prevented that this part of the arthropods will end up in the forced gas flow. Instead, this part is blown besides the forced gas flow and will fall at a distance, where otherwise no arthropods would land because of the high power of the gas flow. In this embodiment it is preferable that the arthropods are introduced in the forced gas flow at a certain distance from the generation of the forced gas flow. Preferably the fraction of arthropods is blown by the counter gas flow before the arthropods are introduced into the forced gas flow.

As the skilled person will understand, a direction having a directional component opposite to the direction of the forced gas flow makes an angle with the direction of the forced gas flow larger than 90' and smaller or equal to 180'.

Preferably about 10% to 30%, more preferably 15%-20% of the arthropods is blown by the counter gas flow.

The counter gas flow may for example be generated by a means that is also suitable for generating the forced gas flow. It should be understood that the means for generating the counter gas flow may have smaller dimensions than the means for generating the forced gas flow. The counter gas flow for example is suitable to blow the arthropods over a horizontal distance of maximal 0,3-1,5 metres, more preferably 0,5-1 metre, most preferably 0,8-1 metre.

In an alternative embodiment of the method for generating the counter gas flow a part of the forced gas flow may be direct through a duct. The inlet of the duct hereby is positioned such that the forced gas flow may enter it. The outlet of the duct is positioned such that the gas flow exiting from it may function as counter gas flow.

In a further preferred embodiment of the method multiple forced gas flows are generated in differing directions. These two differing directions preferably are perpendicular to each other. In all directions of the forced gas flow the method may be performed in accordance to one of the above mentioned embodiments.

In a further preferred embodiment of the invention a nebulised fluid is directed into the forced gas flow. Beneficial arthropods may comprise allergens. Also beneficial arthropods such as predatory mites may be combined with other mites or other arthropods, for example such as in the mite composition described in WO 2006/057552. These added mites or other arthropods may also be a source of allergens. Due to blowing of the arthropods their allergens may be spread. This may cause problems to persons who are (over) sensitive to these allergens. It has been shown that nebulising a fluid in the forced gas flow reduces problems in relation to spreading of allergens. It is tought that the allergens at least partially are captured in the nebulised fluid, and thereby settle faster. Means for nebulisation of fluids are known to the skilled person.

The nebulised fluid may suitably be selected from water and solutions comprising water. For certain applications of certain life stages of certain arthropods, such as pupae or eggs, it is preferred to add an adhesive to the nebulisation fluid. Hereby these life stages may stick to various substrates such as plant parts. A suitable adhesive is for example carboxymethylcellulose.

The method according to the invention is applicable in agriculture in general and (greenhouse) horticulture in general. Of particular interest is that the method according to the invention makes it possible to distribute beneficial arthropods efficiently in *Chysanthemum* species (chrysanthemum) production.

The invention further relates to a device suitable for performing the above described method.

The device comprises a reservoir suitable for holding a number of arthropods that may be distributed by blowing. The reservoir is provided with a number of exits for the arthropods.

The device further comprises a gas displacer suitable for generating a forced gas flow, which forced gas flow is suitable for blowing the beneficial arthropods that may be blown. The function, operation and suitable means that may serve as gas displacer are discussed in relation to the method according to the invention.

Furthermore, the device comprises means to direct the arthropods from the reservoir via the exits in the forced gas flow. The function, operation and suitable means that may be used to direct the arthropods from the reservoir via the exits in the forced gas flow, are discussed in relation to the method according to the invention.

The device is further characterised in that the device comprises means for generating a number of gas flows having an axial velocity gradient, and the means for directing the arthropods in the forced gas flow are adjusted to introduce the arthropods in or in the proximity of a gas flow having an axial velocity gradient.

The means for generating a number of gas flows having an axial velocity gradient comprise for example expansion means. The skilled person will understand that a gas flow may be expanded by directing the gas flow from an exhaust from a pressure duct. Suitable expansion means for example are means to allow the forced gas flow to expand in free space.

The measures in relation to the expansion of the gas flow will be understood by the skilled person after reading the above mentioned description in relation to the method according to the invention.

In a preferred embodiment the device according to the invention comprises means to actuate the device. The device herein may be actuated by making use of actuation means which are part of the device, or alternatively the device may be loaded on a different device having actuation means. In both alternatives it is possible to actuate the device over the ground or hanging on a transport system. These transport means in a different preferred embodiment are suitable to actuate the device along a rail system, having a number of rails, such as a monorail. Hereby the device according to the invention is actuated comparable to a spraying robot, used in greenhouse horticulture, for example for the production of *chrysanthemum* species. According to a further preferred embodiment the actuation means are suitable to actuate the device in a direction having a directional component perpendicular to the direction of the forced gas flow.

The operation and function of the above mentioned elements of the device according to the invention and those of the various preferred embodiments, which form part of the claims, will be understood by the skilled person in view of the above description of the method according to the invention, the attached drawings and the accompanying description to the drawings.

The device according to the invention in preferred embodiment is presented in the attached drawings, wherein:
- figure 1 provides a schematic overview of a number of alternatives for forming a gas flow having an axial velocity gradient,
- figure 2 provides a perspective overview of an embodiment of the device according to the invention,
- figure 3 provides a side view of an embodiment of the device according to the invention, as this is installed in a greenhouse, and
- figure 4 shows a side view of an embodiment of the device, as shown in figure 1, installed in a greenhouse.

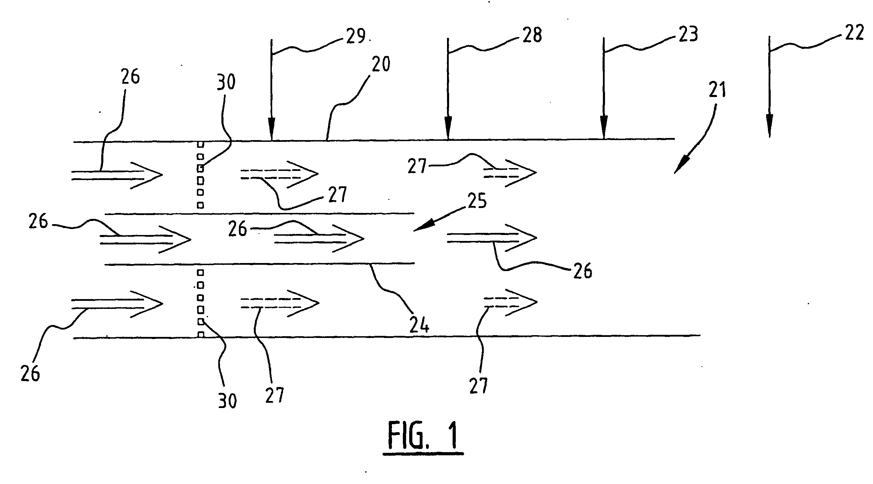

A gas flow having an axial velocity gradient may be generated by allowing a forced gas flow to expand from a pressure duct 20 at an exhaust 21, as shown in figure 1. If the arthropods are introduced in the gas flow having an axial velocity gradient at the position of arrow 22 outside the pressure duct, it is not necessary to take additional measures to prevent damage to the arthropods.

If the arthropods are introduced in the pressure duct, this may be achieved by introducing them in the forced gas flow at a shorter distance from the exhaust 21 in the pressure duct at the arrow 23. For this position the condition 1/D < 2 is fulfilled.

Alternatively in the pressure duct a gas flow having an axial velocity gradient may be formed. This may be achieved by inserting in the pressure duct 20 a second duct 24 having an exhaust 25. In the space between the second duct 24 and the first duct 20 furthermore a gas deceleration means 30 is provided, here a perforated plate. The gas deceleration means decelerate the forced gas flow, indicated with the double arrows 26, whereby a decelerated gas flow, presented by the broken double arrows 27, is formed. Because the forced gas flow may pass the second duct 24 essentially undisturbed, thus after the exhaust 25 of the second duct 24 a gas flow having an axial velocity gradient is created in the duct 20. Because a gas flow having an axial velocity gradient flows through channel 20, it is possible to introduce the arthropods in the forced gas flow at a position after the exhaust 25 of duct 24 in duct 20, for example at the arrow 28. If the decelerated gas flow 27 is sufficiently strong to carry the arthropods, the arthropods may even be introduced at a position between the gas deceleration means 30 and the exhaust 25 of the second duct 24, for example at arrow 29.

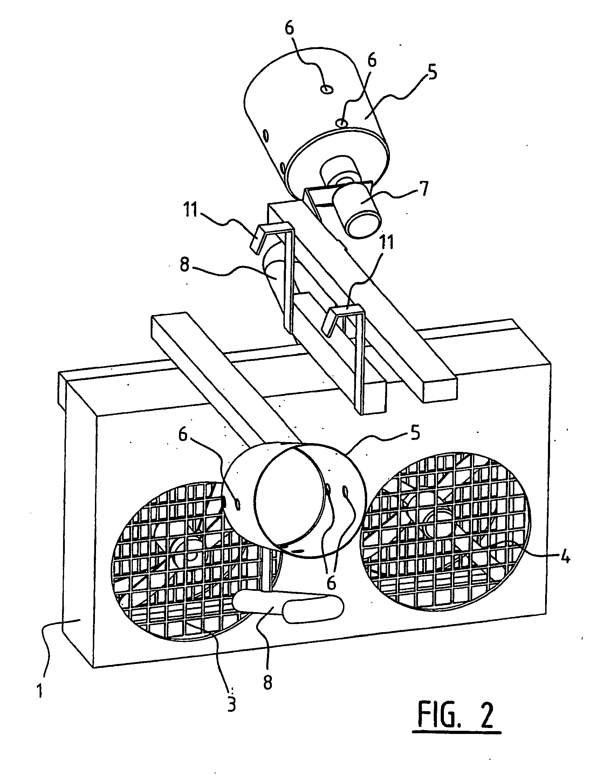

Figure 2 shows an embodiment of the device according to the invention. The device comprises a house 1 having two exhaust openings 3, of which in this view only one is visible. In use the forced gas flow exits these exhaust openings 3. In this embodiment of the device the gas flow is generated by rotors, driven by an electromotor. For the suction of air in the house 1, opposite to the exhaust openings 3 inlet openings 4 are provided, of which in this view only one is visible. Before the exhaust openings 3 and inlet openings 4, as a safety precaution a grid is provided to shield the rotors. The device further comprises reservoirs 5 for holding the beneficial arthropods. These reservoirs in this embodiment of the device according to the invention have the form of a cylinder with a bottom. In the mantle of the cylinder openings 6 are provided. The bottom of the cylinder is connected with the driving shaft of an electromotor 7. Hereby in use the reservoir may be rotated around the axis of the cylinder mantle. During rotation of the reservoirs 5 the beneficial arthropods will, under the influence of gravity, exit the openings 6 in a dosed fashion and will enter the forced gas flow.

The beneficial arthropods will be carried along by the forced gas flow in a path comparable to a horizontal toss. Hereby in general they will land at a certain distance of the device, with a certain spreading. This may cause that directly underneath the device and in the proximity thereof no or hardly any beneficial insects may land. To prevent this, the device in the presented embodiment comprises means for generating a gas flow having a direction with a directional component, opposite to the direction of the forced gas flow and a directional component perpendicular to the direction of the forced gas flow. In the embodiment, as presented in figure 2, this is a tube 8 having an inlet 9 and an outlet 10. The inlet of the tube 8 is positioned such that a part of the forced gas flow enters it. This entering air flow is directed through the inner space of the tube 8, and exits the outlet 10 positioned after a bend in the tube, such that the counter gas flow is created. Hereby a part of the arthropods that fall from opening 6 from the reservoir 5 during use are blown besides the forced air flow. Due to this the arthropods will also, to a certain extent, land under the device and in the proximity thereof. Hereby a more equal spreading of the beneficial arthropods is obtained.

For hanging the device on a spraying robot, the device is provided with hooks 11. This provides a solution for the labour intensive character of spreading beneficial arthropods. As such, the device according to the invention may be actuated above the crop along a transport system of the spraying robot. Alternatively the device may have its own driving mechanism for transport along its own transport system, or the transport system of the spraying robot.

The device in figure 2 is mirror symmetrical, meaning that the back side, which is not visible, is identical to the front side shown.

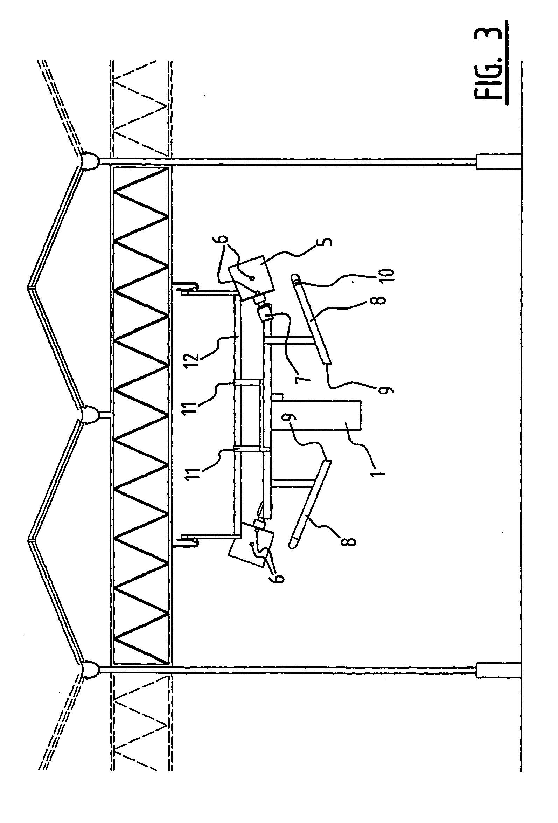

In figure 3 the device according to the invention in an embodiment is shown in a side view. The device in this embodiment is installed for use in a greenhouse. By using hooks 11 the device is installed on the transport system 12 of the spraying robot.

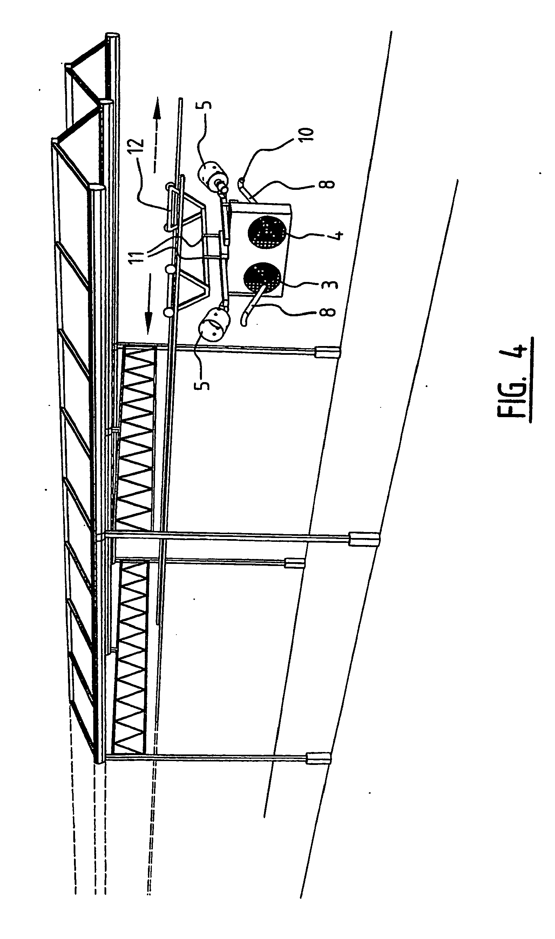

In figure 4 the device according to the invention is shown in a different view, as it is installed in a greenhouse. In use the device will be moved along a transport system 14 in the direction of the broken arrow. In two opposite directions the forced gas flow is generated, perpendicular to the direction of movement. As such, the beneficial arthropods may be distributed efficiently in the crop, by moving the spraying robot and simultaneously blowing the beneficial insects sidewards. After the distribution (dispersion) of the arthropods the device may be moved back to the starting position (in the direction of the broken arrow). Via a shunting device the device may thereafter be guided to a different track for distributing beneficial arthropods.

## Claims

1. Use of a device for distributing beneficial arthropods comprising adult life stages, said device comprising a reservoir (5) suitable for holding a number of beneficial arthropods to be distributed in a crop, which reservoir (5) is provided with a number of exits (6) for the arthropods, a gas displacer suitable for generating a forced gas flow (26, 27) in a blow direction, which forced gas flow (26, 27) is suitable to carry along the beneficial arthropods in the blow direction, and means for directing the arthropods from the reservoir (5) via the exits (6) in the forced gas flow (26, 27), wherein the device further comprises means (3,21,24,25,30) for generating an axial velocity gradient in the forced gas flow, and the means for directing the arthropods in the forced gas flow are designed to introduce the arthropods in or in the proximity of a part of the forced air flow having an axial velocity gradient (26, 27), such that the arthropods in their radial path, meaning perpendicular to the blow direction, move in the direction of the increasing velocity in a part of the forced gas flow (26, 27) having an axial velocity gradient.

2. Use according to claim 1, wherein the means for introducing the arthropods in the proximity of a part of the forced gas flow (26, 27) having an axial velocity gradient are designed to introduce the arthropods in a part of the forced gas flow (26, 27) having an axial velocity gradient.

3. Use according to claims 1-2, wherein the means (3,21,24,25,30) for forming an axial velocity gradient comprise expansion means (3,21,24,25,30), for example means to allow the forced gas flow to expand in free space.

4. Use according to claims 3, wherein the expansion means comprise a first duct (24) having a first exhaust (25) having a first diameter and a second duct (20) having a second exhaust (21) and a second diameter larger than the first diameter, and wherein the first exhaust (25) in the blow direction is placed before the second exhaust (21) and is enclosed by the body of the second duct (20).

5. Use according to claim 4, wherein the device comprises a third channel having an exhaust also enclosed by the body of the second duct (20), and means for forming in the first duct (24) a first component of the forced gas flow having a first gas velocity, means for forming in the third channel a second component of the forced gas flow having a second gas velocity lower than the first gas velocity, and means to introduce the arthropods in the blow direction before expansion of the first component of the forced gas flow in the second duct (20).

6. Use according to claims 4, wherein the device comprises a third duct having an exhaust also enclosed by the body of the second duct (20), and means for forming in the first duct (24) a first component of the forced gas flow having a first gas velocity, means for forming in the third duct a second component of the forced gas flow having a second gas velocity lower than the first gas velocity, and means to introduce the arthropods in the forced gas flow in the blow direction after expansion of the first component of the forced gas flow in the second duct (20).

7. Use according to claims 1-2, wherein the means for introducing the arthropods in the forced gas flow are placed in the blow direction before expansion means (21,25).

8. Use according to any of the claims 1-2, wherein the means for introducing the arthropods in the forced gas flow are placed in the blow direction after expansion means (3,21,24,25,30).

9. Use according to any of the claims 1-8, wherein the device further comprises means (7) suitable to actuate the device, preferably in a direction having a directional component perpendicular to the direction of the forced gas flow.

10. Use according to any of the claims 1-9, wherein the device comprises a gas displacer selected from a rotor or a gas container with a compressed gas.

11. Use according to any of the claims 1-10, wherein the device is designed to generate the forced gas flow (26,27) above a crop and to introduce the arthropods above the crop in the forced gas flow.

12. Use according to any of the claims 1-11, wherein the gas displacer is adjusted to generate a gas flow (26, 27) having a power suitable to blow the arthropods over a horizontal distance of at the most about 0,5-8 meters, preferably about 3-6 meters, more preferably about 4-6 meters, most preferably about 5 meters.

13. Use according to any of the claims 1-12, further comprising means for generating a second gas flow, the counter gas flow, suitable to blow a fraction of the arthropods in a direction having a directional component perpendicular to the direction of the forced gas flow, preferably before introduction into the forced gas flow.

14. Use according claim 13, wherein the means for generating the counter gas flow are suitable to blow the fraction of the arthropods in a direction also having a directional component opposite to the direction of the forced gas flow.

15. Use according to any of the claims 1-14, wherein the device comprises multiple, for example two, gas displacers, positioned such that they may generate the forced gas flows (26, 27) in different directions, preferably in opposite directions.

16. Use according to any of the claims 1-15, wherein the device further comprises a container for a fluid and means to nebulize the fluid, which means for nebulizing the fluid are suitable to introduce the nebulized fluid in the forced gas flow (26, 27).

## Patentansprüche

1. Verwendung einer Einheit zum Verteilen nützlicher Arthropoden, die Adultstadien umfassen, wobei die Einheit ein Behältnis (5) umfasst, das geeignet ist, eine Reihe von nützlichen Arthropoden aufzunehmen, um diese auf einer Nutzpflanze zu verteilen, wobei das Behältnis (5) mit einer Reihe von Auslassen (6) für die Arthropoden versehen ist sowie mit einem Gasverdränger, der geeignet ist, um einen erzwungenen Gasstrom (26, 27) in einer Blasrichtung zu erzeugen, wobei der erzwungene Gasstrom (26, 27) geeignet ist, um die nützlichen Arthropoden in der Blasrichtung mitzuführen, und einem Mittel, um die Arthropoden von dem Behältnis (5) über die Auslasse (6) in den erzwungenen Gasstrom (26, 27) zu lenken, wobei die Einheit weiterhin ein Mittel (3, 21, 24, 25, 30) zum Erzeugen eines axialen Geschwindigkeitsgradienten in dem erzwungenen Gasstrom umfasst, und das Mittel zum Lenken der Arthropoden in den erzwungenen Gasstrom ausgeführt ist, um die Arthropoden in oder in die Nähe eines Teils des erzwungenen Luftstroms mit einem axialen Geschwindigkeitsgradienten (26, 27) einzubringen, so dass sich die Arthropoden in ihrem radialen Pfad, das heißt senkrecht zur Blasrichtung, in Richtung der größer werdenden Geschwindigkeit in einem Teil des erzwungenen Gasstroms (26, 27) mit einem axialen Geschwindigkeitsgradienten bewegen.

2. Verwendung nach Anspruch 1, wobei das Mittel zum Einbringen der Arthropoden in die Nähe eines Teils des erzwungenen Gasstroms (26, 27) mit einem axialen Geschwindigkeitsgradienten ausgeführt ist, um die Arthropoden in einen Teil des erzwungenen Gasstroms (26, 27) mit einem axialen Geschwindigkeitsgradienten einzubringen.

3. Verwendung nach den Ansprüchen 1 bis 2, wobei das Mittel (3, 21, 24, 25, 30) zum Bilden eines axialen Geschwindigkeitsgradienten ein Ausbreitungsmittel (3, 21, 24, 25, 30) umfasst, zum Beispiel ein Mittel, um es dem erzwungenen Gasstrom zu ermöglichen, sich im freien Raum auszubreiten.

4. Verwendung nach Anspruch 3, wobei das Ausbreitungsmittel eine erste Rohrleitung (24) mit einer ersten Ableitung (25) mit einem ersten Durchmesser und eine zweite Rohrleitung (20) mit einer zweiten Ableitung (21) und einem zweiten Durchmesser aufweist, der größer als der erste Durchmesser ist, und wobei die erste Ableitung (25) in Blasrichtung vor der zweiten Ableitung (21) angeordnet ist und vom Körper der zweiten Rohrleitung (20) umschlossen ist.

5. Verwendung nach Anspruch 4, wobei die Einheit einen dritten Kanal mit einer Ableitung umfasst, die ebenfalls vom Körper der zweiten Rohrleitung (20) umschlossen ist, sowie ein Mittel zum Bilden einer ersten Komponente des erzwungenen Gasstroms mit einer ersten Gasgeschwindigkeit in der ersten Rohrleitung (24), ein Mittel zum Bilden einer zweiten Komponente des erzwungenen Gasstroms mit einer zweiten Gasgeschwindigkeit im dritten Kanal, die niedriger als die erste Gasgeschwindigkeit ist, und ein Mittel zum Einbringen der Arthropoden in die Blasrichtung vor der Ausbreitung der ersten Komponente des erzwungenen Gasstroms in der zweiten Rohrleitung (20).

6. Verwendung nach Anspruch 4, wobei die Einheit eine dritte Rohrleitung mit einer Ableitung umfasst, die ebenfalls vom Körper der zweiten Rohrleitung (20) umschlossen ist, sowie ein Mittel zum Bilden einer ersten Komponente des erzwungenen Gasstroms mit einer ersten Gasgeschwindigkeit in der ersten Rohrleitung (24), ein Mittel zum Bilden einer zweiten Komponente des erzwungenen Gasstroms mit einer zweiten Gasgeschwindigkeit im dritten Kanal, die niedriger als die erste Gasgeschwindigkeit ist, und ein Mittel zum Einbringen der Arthropoden in den erzwungenen Gasstrom in Blasrichtung nach der Ausbreitung der ersten Komponente des erzwungenen Gasstroms in der zweiten Rohrleitung (20).

7. Verwendung nach den Ansprüchen 1 bis 2, wobei das Mittel zum Einbringen der Arthropoden in den erzwungenen Gasstrom in Blasrichtung vor dem Ausbreitungsmittel (21, 25) angeordnet ist.

8. Verwendung nach einem der Ansprüche 1 bis 2, wobei das Mittel zum Einbringen der Arthropoden in den erzwungenen Gasstrom in Blasrichtung nach dem Ausbreitungsmittel (3, 21, 24, 25, 30) angeordnet ist.

9. Verwendung nach einem der Ansprüche 1 bis 8, wobei die Einheit weiterhin ein Mittel (7) umfasst, das geeignet ist, um die Einheit vorzugsweise in einer Richtung zu betätigen, die eine Richtungskomponente senkrecht zur Richtung des erzwungenen Gasstroms aufweist.

10. Verwendung nach einem der Ansprüche 1 bis 9, wobei die Einheit weiterhin einen Gasverdränger umfasst, der unter einem Rotor oder einem Gasbehälter mit einem Druckgas ausgewählt wird.

11. Verwendung nach einem der Ansprüche 1 bis 10, wobei die Einheit ausgeführt ist, um den erzwungenen Gasstrom (26, 27) über einer Nutzpflanze zu erzeugen und die Arthropoden über der Nutzpflanze in den erzwungenen Gasstrom einzubringen.

12. Verwendung nach einem der Ansprüche 1 bis 11, wobei der Gasverdränger geeignet ist, um einen Gasstrom (26, 27) mit einer Kraft zu erzeugen, die geeignet ist, um die Arthropoden über eine horizontale Entfernung von höchstens 0,5 bis 8 m, bevorzugt rund 3 bis 6 m, noch besser wären rund 4 bis 6 m, am besten wären 5 m, zu blasen.

13. Verwendung nach einem der Ansprüche 1 bis 12, die weiterhin ein Mittel zum Erzeugen eines zweiten Gasstroms, des Gegengasstroms, umfasst, das geeignet ist, um einen Teil der Arthropoden in eine Richtung mit einer Richtungskomponente senkrecht zur Richtung des erzwungenen Gasstroms zu blasen, vorzugsweise vor dem Einbringen in den erzwungenen Gasstrom.

14. Verwendung nach Anspruch 13, wobei das Mittel zum Erzeugen des Gegengasstroms geeignet ist, um den Teil der Arthropoden in eine Richtung zu blasen, die ebenfalls eine Richtungskomponente entgegen der Richtung des erzwungenen Gasstroms aufweist.

15. Verwendung nach einem der Ansprüche 1 bis 14, wobei die Einheit mehrere, zum Beispiel zwei Gasverdränger umfasst, die so angeordnet sind, dass sie die erzwungenen Gasströme (26, 27) in unterschiedlichen Richtungen, vorzugsweise in entgegengesetzten Richtungen, erzeugen können.

16. Verwendung nach einem der Ansprüche 1 bis 15, wobei die Einheit weiterhin einen Behälter für eine Flüssigkeit und ein Mittel zum Zerstäuben der Flüssigkeit umfasst, wobei das Mittel zum Zerstäuben der Flüssigkeit geeignet ist, um die zerstäubte Flüssigkeit in den erzwungenen Gasstrom (26, 27) einzubringen.

## Revendications

1. Utilisation d'un dispositif pour distribuer des arthropodes utiles comprenant des stades adultes, ledit dispositif comprenant un réservoir (5) adapté pour contenir un certain nombre d'arthropodes utiles à distribuer dans une culture, lequel réservoir (5) est pourvu d'un certain nombre de sorties (6) pour les arthropodes, un dispositif de déplacement de gaz pour produire un flux forcé de gaz (26, 27) dans une direction de soufflage, lequel flux forcé de gaz (26, 27) est adapté pour transporter les arthropodes utiles dans la direction de soufflage, et des moyens pour diriger les arthropodes depuis le réservoir (5), par les sorties (6), dans le flux forcé de gaz (26, 27), étant entendu que le dispositif comprend par ailleurs des moyens (3, 21, 24, 25, 30) pour produire un gradient axial de vitesse dans le flux forcé de gaz et que les moyens pour diriger les arthropodes dans le flux forcé de gaz sont conçus pour introduire les arthropodes dans ou à proximité d'une partie du flux forcé d'air présentant un gradient axial de vitesse (26, 27), de telle sorte que, sur leur trajet radial, c'est-à-dire perpendiculairement à la direction de soufflage, les arthropodes se déplacent dans le sens de la vitesse croissante d'une partie du flux forcé de gaz (26, 27) présentant un gradient axial de vitesse.

2. Utilisation selon la revendication 1, étant entendu que les moyens pour introduire les arthropodes à proximité d'une partie du flux forcé de gaz (26, 27) présentant un gradient axial de vitesse sont conçus pour introduire les arthropodes dans une partie du flux forcé de gaz (26, 27) présentant un gradient axial de vitesse.

3. Utilisation selon les revendications 1-2, étant entendu que les moyens (3, 21, 24, 25, 30) pour créer un gradient axial de vitesse consistent en moyens d'expansion (3, 21, 24, 25, 30), par exemple en moyens permettant au flux forcé de gaz de se répandre dans l'espace libre.

4. Utilisation selon la revendication 3, étant entendu que les moyens d'expansion comprennent un premier conduit (24) comportant un premier échappement (25) ayant un premier diamètre et un second conduit (20) comportant un second échappement (21) et ayant un second diamètre plus grand que le premier diamètre, et étant entendu que, dans la direction de soufflage, le premier échappement (25) est placé avant le second échappement (21) et est enveloppé par le corps du second conduit (20).

5. Utilisation selon la revendication 4, étant entendu que le dispositif comprend un troisième canal comportant un échappement également enveloppé par le corps du second conduit (20), et des moyens pour créer dans le premier conduit (24) une première composante du flux forcé de gaz ayant une première vitesse de gaz, des moyens pour créer dans le troisième canal une seconde composante du flux forcé de gaz ayant une seconde vitesse de gaz inférieure à la première vitesse de gaz, et des moyens pour introduire les arthropodes dans la direction de soufflage avant l'expansion de la première composante du flux forcé de gaz dans le second conduit (20).

6. Utilisation selon la revendication 4, étant entendu que le dispositif comprend un troisième conduit comportant un échappement également enveloppé par le corps du second conduit (20), et des moyens pour créer dans le premier conduit (24) une première composante du flux forcé de gaz ayant une première vitesse de gaz, des moyens pour créer dans le troisième canal une seconde composante du flux forcé de gaz ayant une seconde vitesse de gaz inférieure à la première vitesse de gaz, et des moyens pour introduire les arthropodes dans le flux forcé de gaz dans la direction de soufflage après l'expansion de la première composante du flux forcé de gaz dans le second conduit (20).

7. Utilisation selon les revendications 1-2, étant entendu que les moyens pour introduire les arthropodes dans le flux forcé de gaz sont placés dans la direction de soufflage avant les moyens d'expansion (21, 25).

8. Utilisation selon l'une quelconque des revendications 1-2, étant entendu que les moyens pour introduire les arthropodes dans le flux forcé de gaz sont placés dans la direction de soufflage après les moyens d'expansion (3, 21, 24, 25, 30).

9. Utilisation selon l'une quelconque des revendications 1-8, étant entendu que le dispositif comprend par ailleurs des moyens (7) adaptés pour actionner le dispositif, de préférence dans une direction présentant une composante directionnelle perpendiculaire à la direction du flux forcé de gaz.

10. Utilisation selon l'une quelconque des revendications 1-9, étant entendu que le dispositif comprend un dispositif de déplacement de gaz sélectionné parmi un rotor et un récipient à gaz contenant du gaz comprimé.

11. Utilisation selon l'une quelconque des revendications 1-10, étant entendu que le dispositif est conçu pour produire le flux forcé de gaz (26, 27) au-dessus d'une culture et pour introduire les arthropodes au-dessus de la culture dans le flux forcé de gaz.

12. Utilisation selon l'une quelconque des revendications 1-11, étant entendu que le dispositif de déplacement de gaz est réglé pour produire un flux de gaz (26, 27) possédant une puissance adaptée pour souffler les arthropodes sur une distance horizontale d'au plus environ 0,5-8 mètres, de préférence environ 3-6 mètres, de manière particulièrement préférée environ 5 mètres.

13. Utilisation selon l'une quelconque des revendications 1-12, comprenant par ailleurs des moyens pour produire un second flux de gaz, le contre-flux de gaz, adapté pour souffler une fraction des arthropodes dans une direction présentant une composante directionnelle perpendiculaire à la direction du flux forcé de gaz, de préférence avant l'introduction dans le flux forcé de gaz.

14. Utilisation selon la revendication 13, étant entendu que les moyens pour produire le contre-flux de gaz sont adaptés pour souffler la fraction d'arthropodes dans une direction présentant aussi une composante directionnelle opposée à la direction du flux forcé de gaz.

15. Utilisation selon l'une quelconque des revendications 1-14, étant entendu que le dispositif comprend plusieurs dispositifs de déplacement de gaz, par exemple deux, positionnés de telle sorte qu'ils puissent produire les flux forcés de gaz (26, 27) dans des directions différentes, de préférence dans des directions opposées.

16. Utilisation selon l'une quelconque des revendications 1-15, étant entendu que le dispositif comprend par ailleurs un récipient pour un fluide et des moyens pour nébuliser le fluide, lesquels moyens de nébulisation du fluide sont adaptés pour introduire le fluide nébulisé dans le flux forcé de gaz (26, 27).
